# FASCICULE DE BREVET EUROPEEN

(11) **EP 1 544 103 B1**
(45) Date de publication et mention de la délivrance du brevet: **27.02.2008**
(21) Numéro de dépôt: 04105567.4
(22) Date de dépôt: 05.11.2004
(51) Int. Cl.: B64D 1/06

(54) **Charge largable à partir d'un aéronef comprenant un dispositif de sécurité**
Abwurfbare Fliegerbombe mit einer Sicherheitsvorrichtung
Airborne free-fall charge droppable from an airplane and comprising a safety system

(30) Priorité: 19.12.2003 FR 0315066
(43) Date de publication de la demande: 22.06.2005
(73) Titulaire: TDA ARMEMENTS S.A.S., 45240 La Ferté Saint-Aubin (FR)
(72) Inventeur: POULARD, Eric, 94117, ARCUEIL (FR); COHE, Patrick, 94117, ARCUEIL (FR); PINEL, Gérard, 94117, ARCUEIL (FR)
(74) Mandataire: Lucas, Laurent Jacques

(56) Documents cités:
- FR-A- 2 619 902
- US-A- 3 326 083
- US-A- 3 738 222

## Description

L'invention concerne le domaine des charges largables, par exemple à partir d'un aéronef auquel elles sont fixées, et en particulier leur dispositif de sécurité qui empêche un armement inopiné de la charge avant son largage.

La plupart des charges largables, telles que les bombes, sont équipées d'un certain nombre de système de commande ou d'armement, par exemple des fusées, qu'il est nécessaire d'armer après largage. Ces fusées sont généralement armées à un moment déterminé de la trajectoire de la charge, lorsque celle-ci s'est éloignée d'une distance suffisante pour que la sécurité de l'aéronef soit pleinement assurée. La charge comprend généralement un dispositif de sécurité, qui arme la ou les fusées uniquement en présence d'un ordre d'activation (largage de la charge) et de conditions déterminées.

Dans la plupart des cas, l'ordre d'activation est transmis par un câble, et plus précisément par la traction exercée par ce câble lors de la séparation de la charge de l'aéronef. Ce câble est appelé communément "câble de traction", "câble d'activation" ou "sécurité largable". Il peut être constitué par un câble souple ou semi-rigide, relié à l'une de ses extrémités à la poutre de l'aéronef, c'est à dire la partie métallique fixée à la structure de l'aéronef sur laquelle on accroche les charges, et à l'autre, à la charge à larguer. La fixation du câble à la poutre de l'aéronef se fait par l'intermédiaire d'un crochet situé sur la poutre, ce crochet pouvant être intentionnellement verrouillé par le pilote pour signifier sa volonté d'activation. A un moment du largage, le câble est cassé lorsque la force de traction dépasse un seuil déterminé.

Le dispositif de sécurité est placé de préférence dans un logement existant déjà sur les charges, entre deux anneaux d'accrochage, près de l'endroit où le câble d'activation est fixé à l'aéronef et plus généralement d'où il sort de l'aéronef. Un tel agencement est décrit dans le brevet FR 2 619 902. On limite ainsi la longueur du câble d'activation qui se propage à l'extérieur, c'est à dire la longueur de câble susceptible d'être accidentellement actionnée, ce qui améliore la sécurité. De plus, le câble étant court, il peut exercer sa fonction (traction sur le dispositif de sécurité) de façon rapide et efficace.

Les fusées sont généralement placées à l'avant (montage ogive) ou à l'arrière (montage culot) de la charge. Le dispositif de sécurité est généralement relié à la fusée par un câble électrique circulant à l'intérieur de la charge, dans un conduit prévu à cet effet.

Toutefois, il n'existe pas toujours sur les charges de logement à proximité de l'endroit où le câble d'activation sort de l'aéronef. Dans d'autres charges, où ce logement existe, il peut manquer le conduit interne permettant de relier ce logement à l'avant ou à l'arrière de la charge. Il n'est alors plus possible de placer un dispositif de sécurité entre les deux anneaux d'accrochage, c'est à dire à proximité de l'endroit où le câble d'activation sort de l'aéronef.

Une première approche consiste à placer le dispositif de sécurité dans un logement existant à l'avant ou à l'arrière, et d'allonger en conséquence la partie du câble d'activation qui se propage à l'extérieur. Cette première approche est partiellement suggérée dans le brevet FR 2 641 859, qui précise que le câble d'activation peut être accroché sous l'aéronef à une distance quelconque du dispositif de sécurité. On perd alors les avantages cités précédemment. De plus, dans cette configuration, le câble d'activation fait un angle aigu avec le corps de la charge, et risque de se coincer ou de subir des forces de cisaillement. Si l'aéronef largue la charge dans un mouvement dit de "palier ressource", c'est à dire suite à une montée brusque de l'aéronef visant à donner une impulsion à la charge, le câble peut même se casser avant d'armer la ou les fusées.

Une autre approche, décrite dans le brevet américain délivré le 20 juin 1967 sous le numéro US 3,326,083, (état de la technique le plus proche) consiste à équiper la charge d'un câble de prolongement qui reste solidaire de la charge après largage et dont une extrémité est sertie dans un logement prévu à cet effet dans la fusée. Sur ce câble de prolongement est enfilé un anneau solidaire du câble d'activation de sorte que lors du largage de la charge le câble de prolongement subit de la part du câble d'activation une traction qui le dessertit de la fusée, son extraction entraînant l'activation de la fusée. Cette approche particulière permet avantageusement d'éviter l'utilisation toujours dangereuse d'un câble d'activation long. Elle n'est cependant applicable telle quelle que pour un type particulier de charges pour lesquelles l'activation de la fusée ou plus généralement du dispositif de sécurité d'armement peut être réalisé par le simple arrachage d'un câble.

Une autre approche consiste à transformer la charge. On peut par exemple ajouter un logement sur la charge, à proximité de l'endroit où le câble d'activation sort de l'aéronef. On peut sinon placer le dispositif de sécurité à l'avant ou à l'arrière de la charge, et guider le câble d'activation à l'intérieur d'un tube ajouté à la charge, tel que décrit dans le brevet FR 2 458 460. Ceci permet d'obtenir l'avantage précité de sécurité. Toutefois, ceci ne permet pas d'obtenir les autres avantages relatifs à l'efficacité et à la rapidité d'action. De plus, ces transformations de la charge ne sont pas simple à effectuer et sont coûteuses.

Un but de l'invention est de permettre d'obtenir les avantages en terme de sécurité, d'efficacité, et de rapidité d'action, dans une charge ne permettant pas de placer un dispositif de sécurité à proximité de l'endroit où le câble d'activation sort de l'aéronef, et ce sans avoir à effectuer de modification importante ou coûteuse à la charge.

Par ailleurs, l'invention permet de transférer à l'avant ou à l'arrière de la charge, un dispositif de sécurité initialement prévu pour être placé à proximité de l'endroit où le câble d'activation sort de l'aéronef, et ce sans modifier la configuration de ce dispositif de sécurité.

A cet effet, l'invention a pour objet une interface d'adaptation pour mettre en oeuvre un dispositif de sécurité d'armement de la fusée d'une charge largable, le dispositif de sécurité d'armement comportant un corps et un capot supportant le dispositif de sécurité, le capot étant monté mobile en rotation autour d'un axe fixe par rapport au corps du dispositif de sécurité, le système de sécurité étant activé par l'ouverture du capot. Selon l'invention cette interface comporte:
- un levier, susceptible de pivoter autour d'un axe fixe par rapport à la charge et comportant deux bras s'étendant dans une direction perpendiculaire à l'axe de rotation; le levier étant relié au capot du dispositif de sécurité,
- un câble de transmission, s'étendant à la surface de la charge, fixé aux bras du levier, le câble de transmission étant destiné à être relié à un câble d'activation sortant de l'aéronef, le câble de transmission étant agencé pour transmettre au levier un effort de traction exercé par le câble d'activation, le levier étant agencé pour transmettre au capot du dispositif de sécurité l'effort de traction exercé par le câble de transmission, cet effort étant transmis au capot sous la forme d'une force de traction sensiblement parallèle au câble d'activation et dirigée vers l'aéronef.

Selon un mode de réalisation avantageux, le câble d'activation est relié en l'une de ses extrémités au levier, et en son autre extrémité à un point fixe de la charge.

Selon un mode de réalisation avantageux, le câble d'activation est monté glissant sur le câble de transmission. De cette manière, la traction du câble d'activation peut toujours s'effectuer dans la direction de séparation avion/charge. De plus, ce montage est simple et ne nécessite pas l'adjonction de pièces supplémentaires.

Selon un mode de réalisation avantageux, le câble de transmission étant tendu lorsqu'il est au repos, au moins un dispositif rétractable est inséré sur le câble de transmission, le dispositif rétractable étant configuré pour permettre au câble de transmission de s'allonger d'une longueur donnée, longueur à partir de laquelle il cesse de s'allonger.

Selon un mode de réalisation avantageux, le câble de transmission passe sensiblement par le point de la charge situé au plus près de l'endroit où le câble d'activation sort de l'aéronef. De cette manière, on limite au maximum la longueur du câble d'activation à l'extérieur.

Selon un mode de réalisation avantageux, le levier est configuré de sorte que la force de traction transmise par le levier à la commande présente une intensité sensiblement égale à la traction exercée par le câble d'activation. De cette manière, on assure une interopérabilité entre les dispositifs de sécurité devant être placé entre les anneaux d'accrochage, et ceux devant être déportés à l'avant ou à l'arrière de la charge.

Selon un mode de réalisation avantageux, la liaison entre le câble de transmission et le levier comprend une pièce de liaison, la pièce de liaison étant fixée à une extrémité du câble de transmission, un câble de liaison glissant dans la pièce de liaison, les deux extrémités du câble de liaison étant fixées au levier en deux points de fixation, le milieu des deux points de fixation étant sensiblement placé à l'endroit où l'action de la force de traction exercée par le câble de transmission est la plus efficace pour faire pivoter le levier.

Selon un mode de réalisation avantageux, la droite passant par les deux points de fixation est sensiblement parallèle à l'axe de rotation du levier, et est distante de l'axe de rotation. On simplifie ainsi la structure mécanique.

L'invention a aussi pour objet un procédé de largage d'une charge à partir d'un aéronef, la charge comprenant au moins un dispositif de sécurité monté sur la charge par l'intermédiaire de l'interface selon l'une quelconque des revendications précédentes, caractérisé en ce que :
- on exerce un effort de traction sur un câble d'activation sortant de l'aéronef,
- le câble d'activation transmet l'effort de traction à un câble de transmission s'étendant à la surface de la charge,
- le câble de transmission transmet à un levier l'effort de traction exercé par le câble d'activation,
- le levier pivote autour d'un axe fixe par rapport à la charge, de façon à transmettre l'effort de traction exercé par le câble de transmission au capot du dispositif de sécurité, l'effort de traction étant transmis sous la forme d'une force de traction sensiblement parallèle au câble d'activation et dirigée vers l'aéronef.

D'autres caractéristiques et avantages de l'invention apparaîtront à la lecture de la description détaillée suivante présentée à titre d'illustration non limitative et faite en référence aux figures annexées, lesquelles représentent :
- la figure 1, une charge largable aéroportée et équipée d'un dispositif de sécurité selon l'art antérieur ;
- la figure 2, un dispositif de sécurité destiné à être monté dans un logement situé entre les deux anneaux d'accrochage d'une charge aéroportée ;
- la figure 3, une drisse dont une partie constitue un câble d'activation ;
- la figure 4, une charge largable aéroportée et équipée selon l'invention d'un dispositif de sécurité ;
- la figure 5, une vue en perspective d'un dispositif de sécurité dans une position ouverte ;
- la figure 6, une vue de dessus du dispositif de sécurité représenté à la figure 5 ;
- la figure 7, une coupe selon un premier plan du dispositif de sécurité représenté à la figure 5 ;
- la figure 8, une coupe selon un second plan, parallèle au plan précédent, du dispositif de sécurité représenté à la figure 5 ;
- les figures 9a, 9b, 9c, différentes positions
- la figure 10, un exemple de fixation du câble de transmission à un anneau d'accrochage de la charge.

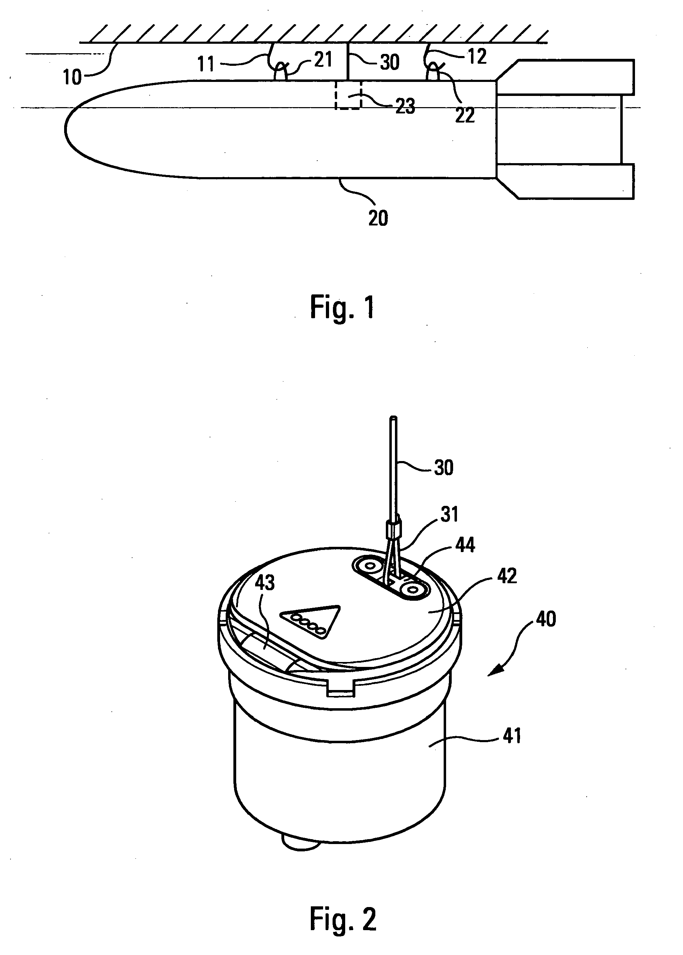

On se réfère à la figure 1 sur laquelle est représentée une charge largable 20 à partir d'un porteur 10 en dessous duquel elle est fixée. La fixation de la charge au porteur est réalisée au moyen de deux anneaux d'accrochage 21, 22 de la charge et de deux crochets 11, 12 du porteur. Le porteur peut être tout type d'aéronef, tel qu'un avion ou un hélicoptère.

La charge 20 comprend des moyens de mise à feu, telle qu'une fusée (non représentée), qui peut être placée par exemple à l'avant (montage ogive) ou à l'arrière (montage culot) de la charge. Quoiqu'il en soit, un dispositif de sécurité (voir figure 2) permet d'armer la fusée.

Le dispositif de sécurité 40 est placé dans un logement 23 de la charge. Il est relié à un câble d'activation 30. Le câble d'activation 30 est par ailleurs relié à l'aéronef. De façon conventionnelle, le logement est prévu entre les deux anneaux d'accrochage 21, 22, c'est à dire près de l'endroit où le câble d'activation 30 sort de l'aéronef. De cette manière, la longueur du câble d'activation se propageant à l'extérieur est limitée au maximum.

On se réfère à la figure 2 sur laquelle est représenté le dispositif de sécurité 40. Il comprend un corps 41 essentiellement cylindrique, au-dessus duquel est monté un capot 42, ce capot étant monté mobile en rotation autour d'un axe fixe 43 par rapport au corps du dispositif de sécurité, qui lui-même est fixe par rapport à la charge. Le câble d'activation 30 est relié au capot, en un point 44 éloigné de l'axe de rotation 43, de manière à pouvoir ouvrir le capot 42 lorsqu'un effort de traction est exercé par le câble d'activation 30. Le point 44 forme ainsi une commande du dispositif de sécurité, qui est actionnée par le câble d'activation, et agit sur le dispositif de sécurité en faisant pivoter le capot autour de son axe de rotation.

La rotation du capot permet par exemple de faire sortir une éolienne (non représentée), pour tester la présence des conditions requises pour armer la fusée. A cet effet, le dispositif de sécurité doit être orienté dans son logement de sorte que l'ouverture se fasse du côté avant de la charge, et amener ainsi l'éolienne dans l'écoulement d'air provoqué par le déplacement de la charge.

Lorsque le dispositif de sécurité est placé dans le logement 23, c'est à dire au plus près de l'endroit où le câble d'activation sort de l'aéronef, la force de traction exercée par le câble d'activation est essentiellement perpendiculaire à la surface du capot. Ceci permet d'ouvrir le capot de façon efficace. Cependant, si le dispositif de sécurité devait être placé un logement à l'avant ou à l'arrière de la charge, la direction de la traction exercée par le câble d'activation ne serait plus perpendiculaire à la surface du capot. L'ouverture serait d'ailleurs impossible si le dispositif de sécurité devait être placé à l'arrière de la charge.

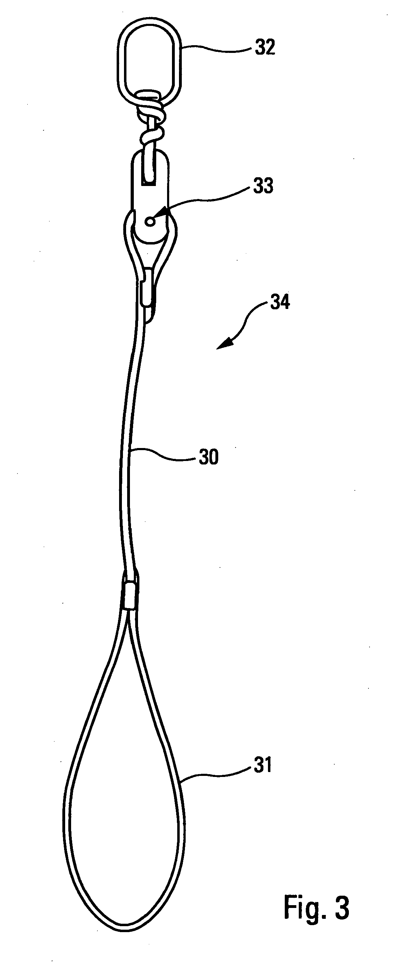

On se réfère à la figure 3 sur laquelle est représentée une drisse 34 équipée du câble d'activation 30. La drisse 34 comprend essentiellement un anneau d'accrochage 32 au porteur, une goupille à cisaillement 33, et le câble d'activation 30. Une extrémité du câble d'activation 30 est fixée par l'intermédiaire de la goupille 33 à l'anneau d'accrochage 32. L'autre extrémité du câble d'activation 30 forme une boucle 31 destinée à être fixée au point 44 du capot, c'est à dire à la commande du dispositif de sécurité.

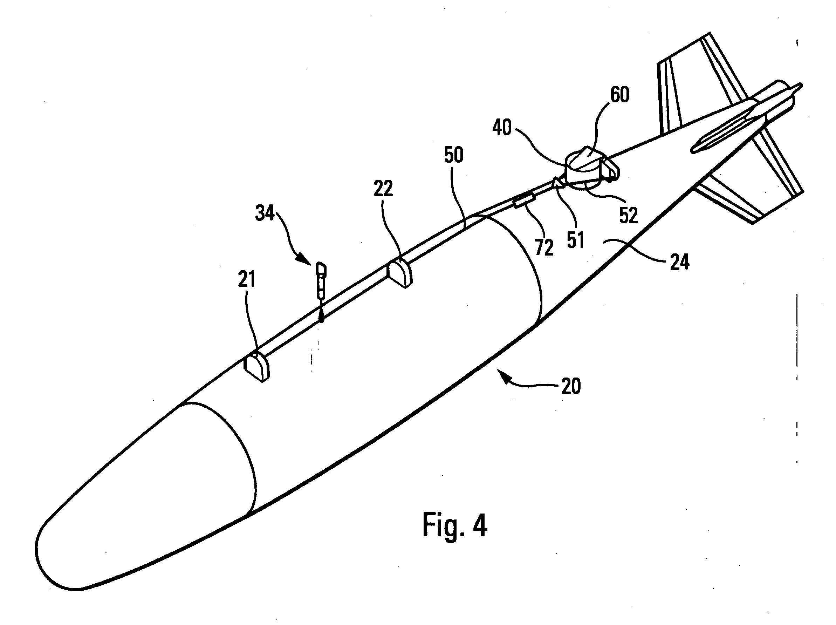

On se réfère à la figure 4 sur laquelle est représenté un exemple de mise en oeuvre de l'invention, dans lequel le dispositif de sécurité 40 est placé dans un logement de l'empennage 24, c'est à dire dans un logement placé à l'arrière de la charge. L'invention permet grâce à une interface mécanique simple à monter sur la charge, de transmettre au dispositif de sécurité la tension du câble d'activation, et ceci comme si le dispositif de sécurité était placé au plus près de l'endroit où le câble d'activation sort de l'aéronef.

L'interface mécanique comprend essentiellement un câble de transmission 50 et un levier 60. Le levier est monté mobile en rotation autour d'un axe fixe par rapport à la charge. Le levier est relié à une commande du dispositif de sécurité. Dans cet exemple, le levier est relié à la commande 44, c'est à dire à l'endroit où est normalement fixée la boucle 31 de la drisse 34.

Le câble de transmission s'étend à la surface de la charge 50. Il est relié au levier. Il est par ailleurs destiné à être relié au câble d'activation. Pour réaliser cette liaison, le câble d'activation peut passer dans la boucle 31 du câble d'activation. En d'autres termes, le câble d'activation peut être monté glissant sur le câble de transmission. La liaison entre le câble d'activation et le câble de transmission est prévue pour transmettre le mouvement vertical du câble d'activation vers câble de transmission, sous la forme d'une tension du câble de transmission.

Le câble de transmission est agencé pour transmettre au levier l'effort de traction exercé par le câble d'activation. Le levier est quant à lui agencé pour transmettre à la commande du dispositif de sécurité l'effort de traction exercé par le câble de transmission. Cet effort est transmis à la commande sous la forme d'une force de traction sensiblement parallèle au câble d'activation et dirigée vers l'aéronef.

On obtient ainsi le résultat souhaité, à savoir le transfert vers l'arrière du dispositif de sécurité, sans modifier la configuration du dispositif de sécurité, et avec une modification simple à mettre en oeuvre de la charge. Par ailleurs, cette interface mécanique est sécurisée en ce sens que le câble de transmission s'étendant à la surface de la charge, on limite les risques de l'actionner de manière intempestive.

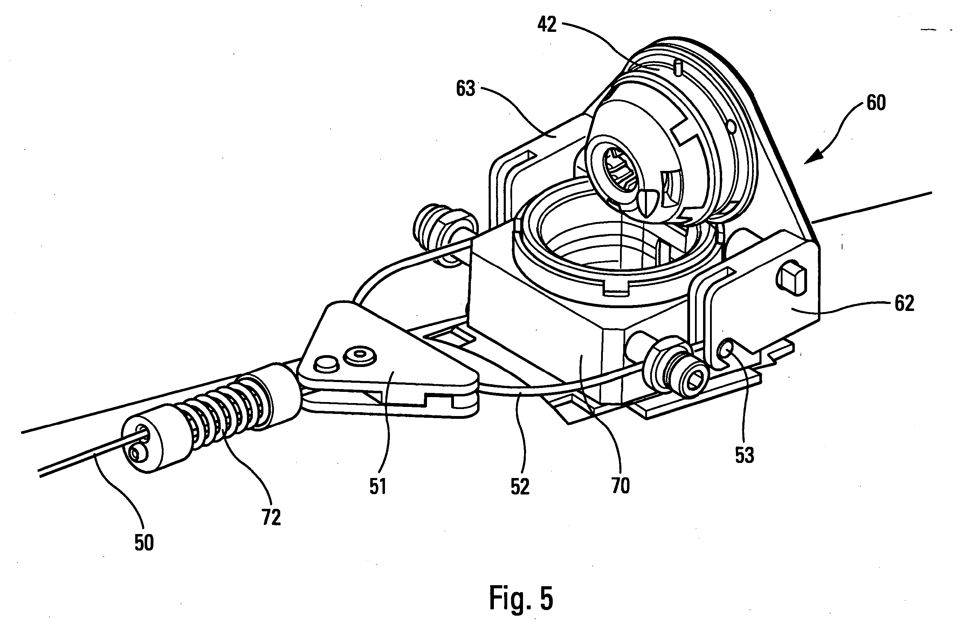

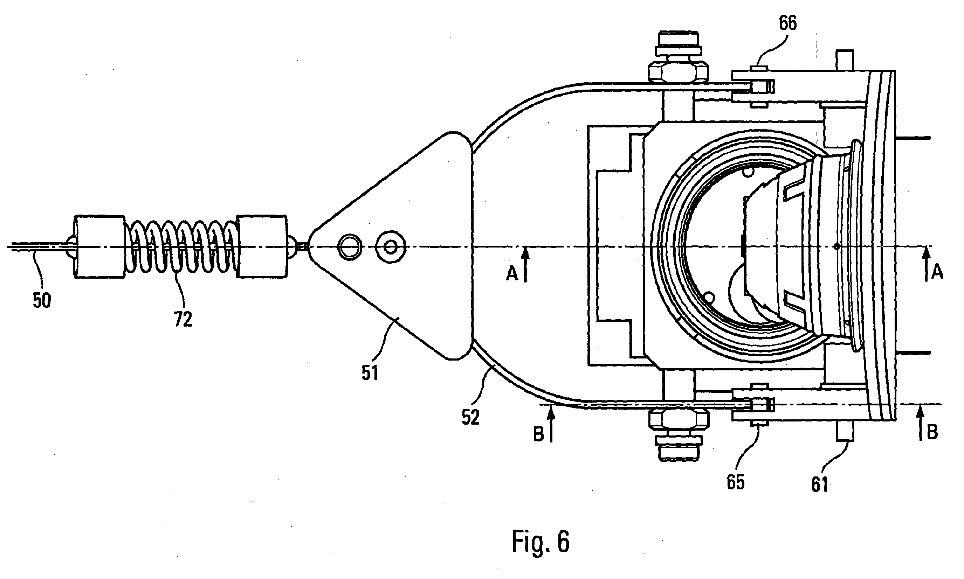

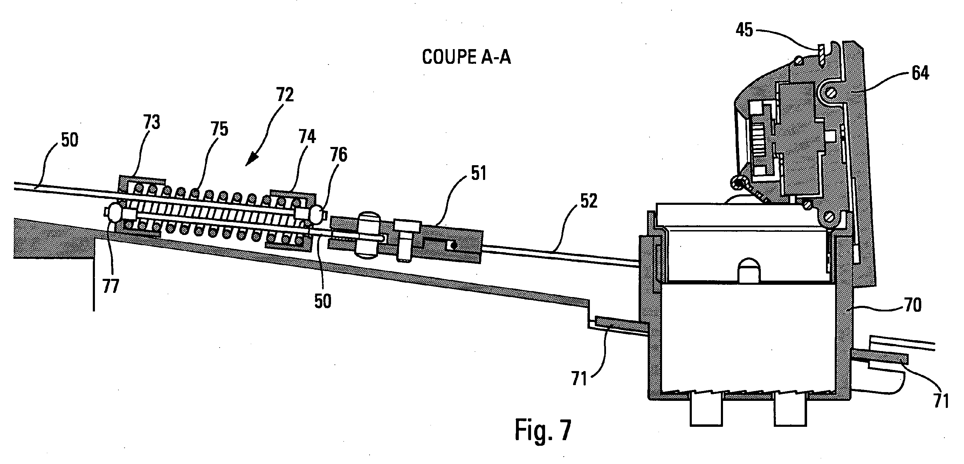

On se réfère aux figures 5 à 8. Le levier 60 peut être solidaire du capot 42, l'axe de rotation du levier 61 étant alors confondu avec l'axe de rotation du capot. Il vient se fixer au capot en lieu et place de la boucle 31 de la drisse. La fixation peut être réalisée avec un ergot 64 maintenu par une goupille (voir la figure 7), par deux vis, ou par tout autre moyen.

Le levier comporte des bras 62, 63, s'étendant dans une direction perpendiculaire à l'axe de rotation. Lorsque le capot est fermé, c'est à dire avant la traction du câble d'activation, les bras s'étendent dans une direction perpendiculaire au câble de transmission.

La liaison entre le câble de transmission et le levier peut comprendre une pièce de liaison 51 et un câble de liaison 52. La pièce de liaison 51 est fixée à une extrémité du câble de transmission. Les deux extrémités du câble de liaison 52 sont fixées au levier en deux points de fixation 65, 66. Les points de fixation 65, 66 sont placés respectivement sur les bras 62, 63 du levier. Le câble de liaison est monté glissant dans la pièce de liaison 51. De cette manière, la force exercée par le câble de transmission sur la pièce de liaison 51 se répartie de façon équilibrée entre les deux points de fixation 65, 66. Ceci revient à dire que le point d'application de la force est le milieu des deux points de fixation. Le milieu est sensiblement placé à l'endroit où l'action de la force de traction exercée par le câble de transmission est la plus efficace pour faire pivoter le levier.

Avantageusement, la droite passant par les deux points de fixation est sensiblement parallèle à l'axe de rotation du levier, et est distante de l'axe de rotation. Dans cet exemple, l'axe de rotation du levier passe par une extrémité des bras, et les points de fixation 65, 66 sont situé à l'autre extrémité des bras.

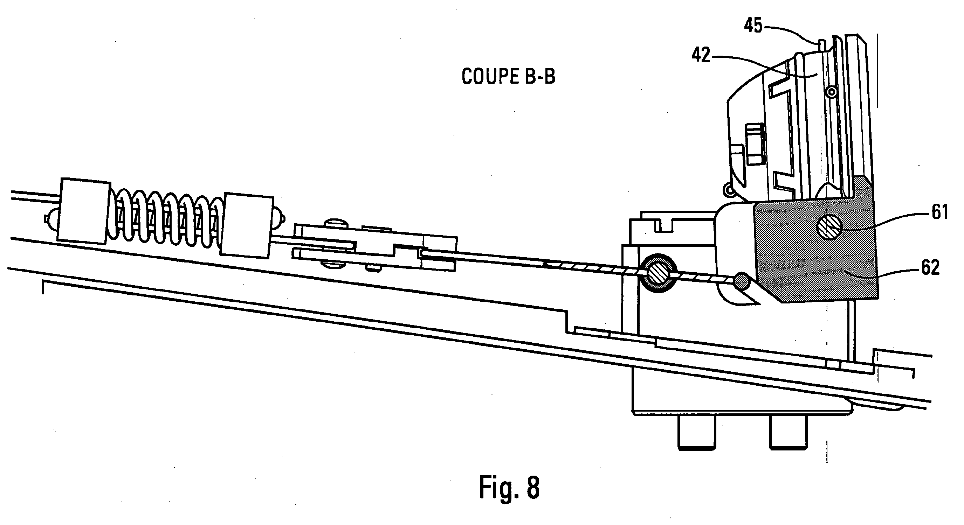

On se réfère aux figures 7 et 8 décrire pour le fonctionnement de cet exemple de réalisation. Lorsque qu'on tire sur la drisse 34 (commande de largage de la charge), celle-ci tend le câble de transmission 50. Le câble de transmission 50 exerce une force longitudinale sur les bras 62, 63 par l'intermédiaire de la pièce de liaison 51 et du câble de liaison 52. Cette force tend à entraîner en rotation le levier 60. Ce mouvement de rotation est dans un premier temps empêché par une goupille à cisaillement 45 du dispositif de sécurité. La goupille à cisaillement est prévue pour maintenir le capot 42 fermé. Elle vient se rompre à partir d'une force déterminée par la norme STANAG 3605, cette force étant comprise entre 133 et 300 N.

Le levier 60 entraîne alors le capot 42 auquel il est fixé en rotation. L'angle de cette rotation est de l'ordre de 90°. Le levier vient alors en butée contre un support 70.

La force exercée par le câble d'activation 50 augmente jusqu'à rupture de la goupille à cisaillement 33, ce qui libère l'aéronef de la charge. La force à partir de laquelle se rompt la goupille 33 est comprise entre 400 et 677 N d'après la norme STANAG 3605.

Selon un mode de réalisation avantageux, le levier est configuré de sorte que la force de traction transmise par le levier à la commande présente une intensité sensiblement égale à la traction exercée par le câble d'activation. On rend ainsi l'interface mécanique totalement transparente vis à vis du dispositif de sécurité.

A cet effet, on peut par exemple ajuster la longueur des bras du levier, qui influe directement sur le rapport entre la force exercée par le câble de transmission (dépendant de la traction exercée par le câble d'activation) et celle transmise par le levier.

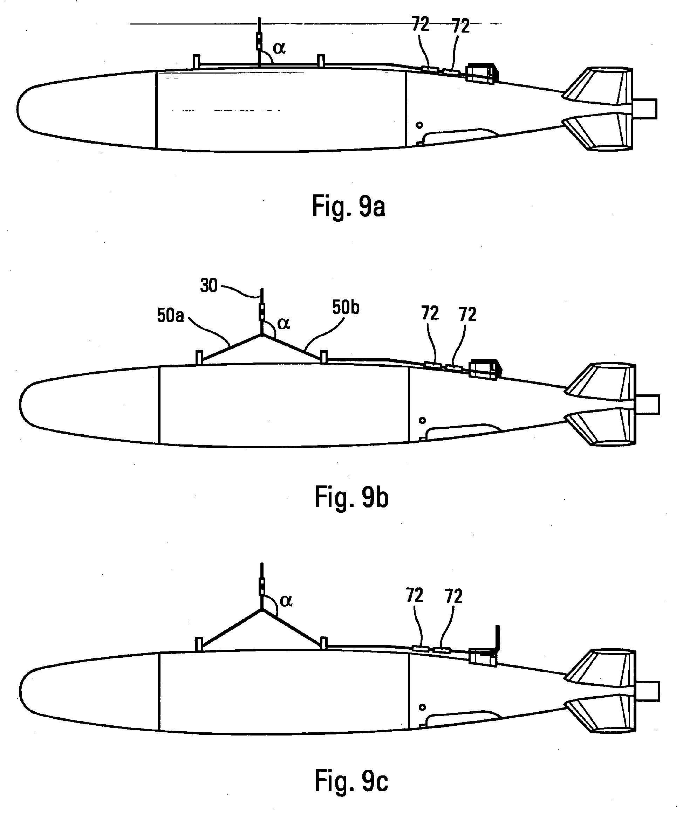

On se réfère aux figures 9a à 9c. Dans ce mode de mise en oeuvre de l'invention, lorsque le câble d'activation 30 agit sur le câble de transmission 50, les efforts sont transmis à deux brins 50a et 50b de ce câble. Dans la position initiale, représentée à la figure 9a, le câble d'activation 30 fait un angle α de 90° avec chacun des brins 50a et 50b. Par conséquent, les efforts sont transmis avec un facteur de démultiplication en théorie infini si tous les câbles sont sous tension.

Afin d'éviter ce phénomène de démultiplication, plusieurs solutions sont envisageables. Le câble de transmission peut présenter du mou, pour ne pas être tendu dans la position initiale, le câble de transmission étant tendu à partir du moment où l'angle α a une valeur supérieure à 90°, cette valeur à partir de laquelle le câble est tendu pouvant être par exemple 120°. Une autre solution consiste à prévoir un câble de transmission présentant une certaine élasticité lui permettant d'obtenir ce même effet.

On décrit maintenant une solution avantageuse, permettant d'éviter ce phénomène de démultiplication. Cette solution avantageuse consiste essentiellement à prévoir un ou plusieurs dispositifs rétractables 72, insérés sur le câble de transmission. Un dispositif rétractable est un dispositif permettant au câble de transmission de s'allonger d'une longueur donnée, longueur à partir de laquelle il cesse de s'allonger. Les dispositifs rétractables permettent en outre de garantir une légère tension au repos, c'est à dire dans la position initiale représentée à la figure 9a. Le câble de transmission étant au moins légèrement tendu, ceci permet de limiter les risques de l'accrocher accidentellement lors d'une manoeuvre.

Les dispositifs rétractables sont de préférence configurés de sorte que l'angle α soit de l'ordre de 120° lorsque le câble de transmission cesse de s'allonger. Ainsi, le câble de transmission ne transmet aucun effort ou presque aucun effort, de la position initiale (figure 9a) jusqu'à une position intermédiaire représentée à la figure 9b. Dans cette position intermédiaire, Le câble de d'activation 30 et les deux brins 50a et 50b sont séparés les uns des autres sensiblement d'un même angle, de l'ordre de 120°. Par conséquent, les efforts sont transmis sans aucun facteur de démultiplication du câble d'activation au câble de transmission.

Lorsqu'on continue à tirer sur le câble d'activation 30, les dispositifs rétractables cessent de s'allonger. L'effort de traction exercé sur ce câble est entièrement transmis aux deux brins du câble de transmission. Le câble de transmission agit alors sur le levier, comme représenté à la figure 9c, qui lui-même agit sur la commande du dispositif de sécurité, comme décrit précédemment.

Selon un autre mode de réalisation, les dispositifs rétractables sont configurés pour obtenir un angle α de l'ordre de 180°. On divise alors l'effort exercé par le câble d'activation par deux au niveau de chaque brin. En d'autres termes, l'effort exercé par le câble d'activation 30 est réparti entre les deux brins 50a et 50b du câble de transmission. Ceci permet de rendre le câble de transmission moins sensible à d'éventuelles tractions parasites. On pourra alors ajuster la longueur des bras de levier en conséquence, comme décrit précédemment.

On se réfère à la figure 7 qui montre un exemple de réalisation pratique d'un dispositif rétractable 72. Un dispositif rétractable est inséré dans le câble de transmission 50. Pour réaliser cette insertion, le câble de transmission est séparé en deux parties, chaque partie se terminant par une extrémité 76 et 77. Le dispositif rétractable comprend deux coupes 73, 74, une coupe 74 étant fixée à l'une des extrémités 76, l'autre coupe 73 étant fixée à l'autre extrémité 77. Les deux coupes peuvent être maintenues à distance par un ressort 75, faisant partie intégrante du dispositif rétractable.

Au repos, le ressort est allongé. Lorsqu'on exerce une force de tension sur le câble de transmission, le ressort se comprime. Lors de cette compression, les coupes se rapprochent jusqu'à arriver en butée l'une contre l'autre. Le ressort est configuré de sorte que sa force de compression soit intérieure à la force de cisaillement de la goupille 45.

Bien entendu, le dispositif rétractable peut prendre une autre forme. Par exemple, le dispositif rétractable peut être réalisé avec un système élastique.

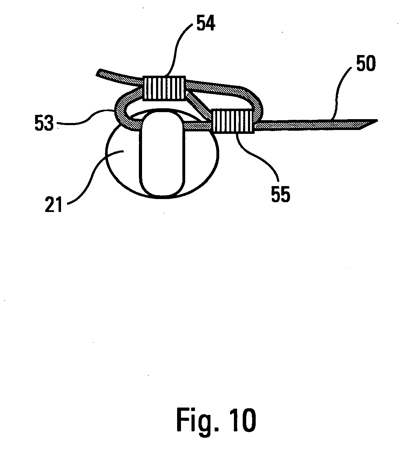

On se réfère à la figure 10. L'autre extrémité du câble de transmission, c'est à dire celle qui n'est pas reliée au levier, est de préférence fixée à un point fixe de la charge. Ce point peut être par exemple l'un des anneaux d'accrochage. Dans cet exemple, dans lequel le dispositif de sécurité est placé à l'arrière 24 de la charge, le point fixe de la charge auquel est relié le câble de transmission est l'anneau d'accrochage avant 21 (voir la figure 4). La fixation du câble de transmission à un anneau, peut être réalisée avec un système auto-serrant. On utilise à cet effet deux ressorts 54, 55 dans lesquels l'extrémité du câble 50 fait un huit, une boucle 53 du huit passant dans l'anneau d'accrochage 21.

De cette manière, le câble de transmission passe sensiblement par le point de la charge situé au plus près de la liaison entre le câble d'activation et l'aéronef. Ceci permet de limiter au maximum la longueur du câble d'activation, ce qui améliore la sécurité du dispositif selon l'invention.

De manière avantageuse, le câble de transmission passe dans un ou plusieurs anneaux de guidage, disposés à la surface de la charge. On peut par exemple faire passer le câble de transmission dans l'autre anneau d'accrochage, c'est à dire l'anneau d'accrochage arrière 22 dans cet exemple de réalisation. On transforme ainsi le mouvement radial du câble d'activation en mouvement longitudinal du câble de transmission.

On se réfère à la figure 7. Le logement de l'empennage, dans lequel est placé le dispositif de sécurité, est généralement fermé par une trappe d'accès amovible. Cette trappe d'accès protège l'intérieur de la charge de l'environnement extérieur, notamment de l'humidité. Selon un mode de réalisation avantageux, on prévoit une plaque 71 pour remplacer la trappe d'accès amovible. Cette plaque est munie du support 70. Le support 70 présente un logement dans lequel est placé le dispositif de sécurité. De préférence, le logement du support présente une forme similaire à celle des logements qui sont prévus de façon conventionnelle entre les deux anneaux d'accrochage. On permet ainsi d'assurer une compatibilité avec la fixation des dispositifs de sécurité conventionnels. En d'autres termes, l'ensemble formé par la plaque 71 et le support 70 forme une interface entre le logement de l'empennage et le dispositif de sécurité, cette interface assurant une fonction de compatibilité.

Avantageusement, le support 70 sert aussi à supporter l'axe de rotation du levier. Bien que d'un point de vue mécanique, il ne soit pas nécessaire de prévoir un autre support d'axe de rotation que celui déjà prévu pour supporter la rotation du capot, il est préférable de le faire pour supporter des efforts plus importants. En effet, le déport vers l'arrière du dispositif de sécurité augmente les efforts exercés sur l'axe de rotation.

D'autres configurations du câble de transmission sont possibles, du moment que le câble de transmission est agencé pour transmettre au levier l'effort de traction exercé par le câble d'activation. Ainsi, les deux extrémités du câble de transmission peuvent être reliées toutes les deux à l'anneau d'accrochage avant, le câble de transmission passant alors dans la pièce de liaison 51. On aura alors deux brins de ce câble qui s'étendront entre l'anneau d'accrochage et la pièce de liaison 51. L'un, l'autre ou les deux brins pourront alors passer dans la boucle 31 du câble d'activation.

Selon un autre mode de réalisation, les deux extrémités du câble d'activation sont reliées aux deux points de fixation 65 et 66, en lieu et place du câble de liaison 52. La pièce de liaison 51 peut être alors supprimée. Le câble de transmission peut être monté glissant à l'intérieur de l'anneau d'accrochage avant. On disposera comme précédemment de deux brins, qui pourront passer l'un ou l'autre ou tous les deux dans la boucle 31.

Bien entendu, le dispositif de sécurité peut être placé dans un logement avant au lieu d'un logement arrière. Il suffit pour cela d'adapter l'exemple précédent en fixant l'extrémité du câble de transmission à l'autre anneau d'accrochage, et en orientant les bras 62, 63 vers l'extérieur au lieu de l'intérieur de la charge.

## Revendications

1. Interface d'adaptation pour mettre en oeuvre un dispositif de sécurité d'armement (40) de la fusée d'une charge largable(20), le dispositif de sécurité d'armement comportant un corps (41) et un capot (42) supportant le dispositif de sécurité, le capot étant monté mobile en rotation autour d'un axe fixe (43) par rapport au corps du dispositif de sécurité, le système de sécurité étant activé par l'ouverture du capot, l'interface comportant
- un levier (60), susceptible de pivoter autour d'un axe (61) fixe par rapport à la charge et comportant deux bras (62, 63) s'étendant dans une direction perpendiculaire à l'axe de rotation; le levier étant relié au capot (42) du dispositif de sécurité (40),
- un câble de transmission (50), s'étendant à la surface de la charge, fixé aux bras (62, 63) du levier, le câble de transmission (50) étant destiné à être relié à un câble d'activation (30) sortant de l'aéronef, le câble de transmission (50) étant agencé pour transmettre au levier (60) un effort de traction exercé par le câble d'activation (30), le levier (60) étant agencé pour transmettre au capot (42) du dispositif de sécurité (40) l'effort de traction exercé par le câble de transmission (50), cet effort étant transmis au capot (42) sous la forme d'une force de traction sensiblement parallèle au câble d'activation (30) et dirigée vers l'aéronef.

2. Interface selon la revendication 1 dans laquelle le câble de transmission (50) est relié en l'une de ses extrémités au levier (60), et en son autre extrémité à un point fixe de la charge (21).

3. Interface selon l'une des revendications précédentes dans laquelle le câble d'activation (30) est monté glissant sur le câble de transmission (50).

4. Interface selon l'une des revendications précédentes dans laquelle le câble de transmission étant tendu lorsqu'il est au repos, au moins un dispositif rétractable (72) est inséré sur le câble de transmission (50), le dispositif rétractable étant configuré pour permettre au câble de transmission de s'allonger sans transmettre d'effort au levier (60) d'une longueur donnée pour laquelle il fait un angle α avec le câble d'activation (30), longueur à partir de laquelle il cesse de s'allonger.

5. Interface selon la revendication 4 dans laquelle le dispositif rétractable (72) est configuré pour permettre au câble de transmission de s'allonger d'une longueur pour laquelle α vaut sensiblement 120°.

6. Interface selon l'une des revendications précédentes dans laquelle le câble de transmission (50) passe sensiblement par le point de la charge situé au plus près de l'endroit où le câble d'activation (30) sort de l'aéronef.

7. Interface selon la revendication 1 dans laquelle le levier (60) est configuré de sorte que la force de traction transmise par le levier (60) au capot (42) présente une intensité sensiblement égale à la traction exercée par le câble d'activation (30).

8. Interface selon la revendication 1 dans laquelle la liaison entre le câble de transmission (50) et le levier (60) comprend une pièce de liaison (51), la pièce de liaison étant fixée à une extrémité du câble de transmission (50) et un câble de liaison (52) glissant dans la pièce de liaison (51), les deux extrémités du câble de liaison étant fixées aux bras (62, 63) du levier en deux points de fixation (65, 66), le milieu des deux points de fixation étant sensiblement placé à l'endroit où l'action de la force de traction exercée par le câble de transmission est la plus efficace pour faire pivoter le levier.

9. Interface selon la revendication 7 dans lequel la droite passant par les deux points de fixation (65, 66) est sensiblement parallèle à l'axe de rotation (61) du levier (60), et est distante de cet axe de rotation.

10. Procédé pour activer le dispositif de sécurité d'armement d'une charge (20) lors de son largage à partir d'un aéronef, la charge comportant un dispositif de sécurité d'armement apte à être monté sur la charge par l'intermédiaire de l'interface selon l'une quelconque des revendications précédentes, **caractérisé en ce que** :
- on exerce un effort de traction sur un câble d'activation (30) sortant de l'aéronef,
- le câble d'activation (30) transmet l'effort de traction à un câble de transmission (50) s'étendant à la surface de la charge,
- le câble de transmission transmet à un levier (60) l'effort de traction exercé par le câble d'activation,
- le levier pivote autour d'un axe (61) fixe par rapport à la charge, de façon à transmettre l'effort de traction exercé par le câble de transmission (50) au capot (42) du dispositif de sécurité, l'effort de traction étant transmis sous la forme d'une force de traction sensiblement parallèle au câble d'activation et dirigée vers l'aéronef.

## Claims

1. Adaptation interface for using a safety arming device (40) for the fuse of a droppable load (20), the safety arming device comprising a body (41) and a cap (42) supporting the safety device, the cap being mounted such that it is mobile in rotation about an axis (43) that is fixed with respect to the body of the safety device, the safety system being activated by the opening of the cap, the interface comprising:
- a lever (60), able to pivot about a fixed axis (61) with respect to the load and comprising two arms (62, 63) extending in a direction perpendicular to the axis of rotation, the lever being connected to the cap (42) of the safety device (40),
- a transmission cable (50), extending on the surface of the load fixed to the arms (62, 63) of the lever, the transmission cable (50) being intended to be connected to an activating cable (30) emerging from the aircraft, the transmission cable (50) being arranged to transmit to the lever (60) a traction force applied by the activating cable (30), the lever (60) being arranged to transmit to the cap (42) of the safety device (40) the traction force applied by the transmission cable (50), this force being transmitted to the cap (42) in the form of a traction force substantially parallel with the activating cable (30) and directed towards the aircraft.

2. Interface according to Claim 1, **characterized in that** the transmission cable (50) is connected at one of its ends to the lever (60) and at its other end to a fixed point of the load (21).

3. Interface according to one of the preceding claims, **characterized in that** the activating cable (30) is fitted in a sliding manner on the transmission cable (50).

4. Interface according to one of the preceding claims, **characterized in that**, the transmission cable being taut when it is in the rest state, at least one retractable device (72) is inserted in the transmission cable (50), the retractable device being configured to allow the transmission cable to elongate, without transmitting force to the lever (60), by a given length for which it makes an angle α with the activating cable (30), a length after which it stops elongating.

5. Interface according to Claim 4, **characterized in that** the retractable device (72) is configured to allow the transmission cable to elongate by a length for which α is substantially equal to 120°.

6. Interface according to one of the preceding claims, **characterized in that** the transmission cable (50) passes substantially through the point of the load located closest to the place where the activating cable (30) emerges from the aircraft.

7. Interface according to Claim 1, **characterized in that** the lever (60) is configured such that the traction force transmitted by the lever (60) to the cap (42) has a magnitude substantially equal to the traction applied by the activating cable (30).

8. Interface according to Claim 1, **characterized in that** the connection between the transmission cable (50) and the lever (60) comprises a connecting part (51), the connecting part being fixed to one end of the transmission cable (50) and a connecting cable (52) sliding in the connecting part (51), the two ends of the connecting cable being fixed to the arms (62, 63) of the lever at two fixing points (65, 66), the centre of the two fixing points being substantially placed at the place where the action of the traction force applied by the transmission cable is most effective for pivoting the lever.

9. Interface according to Claim 7, **characterized in that** the straight line passing through the two fixing points (65, 66) is substantially parallel with the axis of rotation (61) of the lever (60) and is distant from that axis of rotation.

10. Method for activating the safety arming device of a load (20) when it is dropped from an aircraft, the load comprising a safety arming device able to be mounted on the load by the intermediary of the interface according to any one of the preceding claims, **characterized in that**:
- a traction force is applied on an activating cable (30) emerging from the aircraft,
- the activating cable (30) transmits the traction force to a transmission cable (50) extending on the surface of the load,
- the transmission cable transmits to a lever (60) the traction force applied by the activating cable,
- the lever pivots about an axis (61) that is fixed with respect to the load, in such a way as to transmit the traction applied by the transmission cable (50) to the cap (42) of the safety device, the traction force being transmitted in the form of a traction force substantially parallel with the activating cable and directed towards the aircraft.

## Patentansprüche

1. Anpassungs-Verbindungsstelle zur Anwendung einer Scharfmachungs-Sicherheitsvorrichtung (40) des Zünders einer abwerfbaren Ladung (20), wobei die Scharfmachungs-Sicherheitsvorrichtung einen Körper (41) und eine Abdeckhaube (42) aufweist, die die Sicherheitsvorrichtung trägt, wobei die Abdeckhaube bezüglich des Körpers der Sicherheitsvorrichtung um eine feste Achse (43) drehbeweglich montiert ist, wobei das Sicherheitssystem durch das Öffnen der Abdeckhaube aktiviert wird, wobei die Verbindungsstelle aufweist:
- einen Hebel (60), der um eine feste Achse (61) bezüglich der Ladung schwenken kann und zwei Arme (62, 63) aufweist, die sich in einer Richtung lotrecht zur Drehachse erstrecken; wobei der Hebel mit der Abdeckhaube (42) der Sicherheitsvorrichtung (40) verbunden ist,
- ein Übertragungskabel (50), das sich an der Oberfläche der Ladung erstreckt, das an den Armen (62, 63) des Hebels befestigt ist, wobei das Übertragungskabel (50) dazu bestimmt ist, mit einem aus dem Luftfahrzeug austretenden Aktivierungskabel (30) verbunden zu werden, wobei das Übertragungskabel (50) eingerichtet ist, um an den Hebel (60) eine Zugkraft zu übertragen, die vom Aktivierungskabel (30) ausgeübt wird, wobei der Hebel (60) eingerichtet ist, um an die Abdeckhaube (42) der Sicherheitsvorrichtung (40) die vom Übertragungskabel (50) ausgeübte Zugkraft zu übertragen, wobei diese Kraft an die Abdeckhaube (42) in Form einer Zugkraft im Wesentlichen parallel zum Aktivierungskabel (30) und zum Luftfahrzeug gerichtet übertragen wird.

2. Verbindungsstelle nach Anspruch 1, bei der das Übertragungskabel (50) an einem seiner Enden mit dem Hebel (60) und an seinem anderen Ende mit einem festen Punkt der Ladung (21) verbunden ist.

3. Verbindungsstelle nach einem der vorhergehenden Ansprüche, bei der das Aktivierungskabel (30) gleitend auf das Übertragungskabel (50) montiert ist.

4. Verbindungsstelle nach einem der vorhergehenden Ansprüche, bei der, da das Übertragungskabel in der Ruhestellung gespannt ist, mindestens eine einziehbare Vorrichtung (72) auf das Übertragungskabel (50) eingefügt ist, wobei die einziehbare Vorrichtung konfiguriert ist, um es dem Übertragungskabel zu erlauben, sich ohne eine Kraft auf den Hebel (60) zu übertragen um eine gegebene Länge auszudehnen, für die es einen Winkel α mit dem Aktivierungskabel (30) bildet, eine Länge, von der ausgehend es sich nicht mehr ausdehnt.

5. Verbindungsstelle nach Anspruch 4, bei der die einziehbare Vorrichtung (72) konfiguriert ist, um es dem Übertragungskabel zu ermöglichen, sich um eine Länge auszudehnen, bei der α im Wesentlichen 120° beträgt.

6. Verbindungsstelle nach einem der vorhergehenden Ansprüche, bei der das Übertragungskabel (50) im Wesentlichen durch den Punkt der Ladung geht, der sich der Stelle am nächsten befindet, an der das Aktivierungskabel (30) aus dem Luftfahrzeug austritt.

7. Verbindungsstelle nach Anspruch 1, bei der der Hebel (60) so konfiguriert ist, dass die vom Hebel (60) an die Abdeckhaube (42) übertragene Zugkraft eine Stärke im Wesentlichen gleich dem Zug aufweist, der vom Aktivierungskabel (30) ausgeübt wird.

8. Verbindungsstelle nach Anspruch 1, bei der die Verbindung zwischen dem Übertragungskabel (50) und dem Hebel (60) ein Verbindungsstück (51) aufweist, wobei das Verbindungsstück an einem Ende des Übertragungskabels (50) befestigt ist und ein Verbindungskabel (52) im Verbindungsstück (51) gleitet, wobei die zwei Enden des Verbindungskabels an den Armen (62, 63) des Hebels an zwei Befestigungspunkten (65, 66) befestigt sind, wobei die Mitte der zwei Befestigungspunkte sich im Wesentlichen an der Stelle befindet, an der die Einwirkung der vom Übertragungskabel ausgeübten Zugkraft am wirksamsten ist, um den Hebel schwenken zu lassen.

9. Verbindungsstelle nach Anspruch 7, bei der die Gerade, die durch die zwei Befestigungspunkte (65, 66) verläuft, im Wesentlichen parallel zur Drehachse (61) des Hebels (60) ist und einen Abstand zu dieser Drehachse aufweist.

10. Verfahren zur Aktivierung der Scharfmachungs-Sicherheitsvorrichtung einer Ladung (20) bei ihrem Abwurf ausgehend von einem Luftfahrzeug, wobei die Ladung eine Scharfmachungs-Sicherheitsvorrichtung aufweist, die auf die Ladung mittels der Verbindungsstelle nach einem der vorhergehenden Ansprüche montiert werden kann, **dadurch gekennzeichnet, dass**:
- eine Zugkraft auf ein aus dem Luftfahrzeug austretendes Aktivierungskabel (30) ausgeübt wird,
- das Aktivierungskabel (30) die Zugkraft an ein Übertragungskabel (50) überträgt, das sich an der Oberfläche der Ladung erstreckt,
- das Übertragungskabel die vom Aktivierungskabel ausgeübte Zugkraft an einen Hebel (60) überträgt,
- der Hebel um eine Achse (61) schwenkt, die bezüglich der Ladung fest ist, um die vom Übertragungskabel (50) ausgeübte Zugkraft auf die Abdeckhaube (42) der Sicherheitsvorrichtung zu übertragen, wobei die Zugkraft in Form einer Zugkraft übertragen wird, die im Wesentlichen parallel zum Aktivierungskabel und zum Luftfahrzeug gerichtet ist.
